# EUROPÄISCHE PATENTANMELDUNG

(11) **EP 4 597 382 A1**
(43) Veröffentlichungstag der Anmeldung: **06.08.2025**
(21) Anmeldenummer: 24154886.6
(22) Anmeldetag: 31.01.2024
(51) Int. Cl.: G06Q 10/0631, G06Q 10/087, G06Q 50/04, G06F 30/12

(54) **VERFAHREN ZUM COMPUTERGESTÜTZTEN ABGLEICHEN VON MINDESTENS ZWEI UNTERSCHIEDLICHEN DARSTELLUNGSVARIANTEN EINER INDUSTRIELLEN ANLAGE**

(71) Anmelder: Murrelektronik GmbH, 71570 Oppenweiler (DE)
(72) Erfinder: Pfestorf, Sebastian, 76137 Karlsruhe (DE); Binder, Sven, 71522 Backnang (DE); Zeller, Dr. Paul, 74223 Flein (DE)
(74) Vertreter: Goebel, Sebastian

(57) **Zusammenfassung**

Die Erfindung betrifft ein Verfahren (100) zum computer-gestützten Abgleichen von mindestens zwei unterschiedlichen Darstellungsvarianten (210,220) einer industriellen Anlage, insbesondere einer elektrischen Maschine und/oder einer industriellen Automatisierungsanlage. Ferner betrifft die Erfindung ein Computerprogramm sowie eine Vorrichtung zur Datenverarbeitung zu diesem Zweck.

## Beschreibung

Die vorliegende Erfindung betrifft ein Verfahren zum computer-gestützten Abgleichen von mindestens zwei unterschiedlichen Darstellungsvarianten einer industriellen Anlage. Ferner betrifft die Erfindung ein Computerprogramm und eine Vorrichtung.

### Stand der Technik

Es ist aus dem Stand der Technik bekannt, dass bei der Planung von industriellen Anlagen sowohl ECAD- als auch MCAD-Daten verwendet werden. Allerdings sind diese oft unzureichend miteinander verknüpft, da beispielsweise im MCAD enthaltene Bauteilinformationen wie beispielsweise Betriebsmittelkennzeichnungen oft nicht vorhanden sind. Dies kann zu Fehlern in der Planung und Ausführung führen und erhöht den Zeitaufwand für die manuelle Abstimmung der Daten.

### Offenbarung der Erfindung

Es ist daher eine Aufgabe der vorliegenden Erfindung, die voranstehend beschriebenen Nachteile zumindest teilweise zu beheben. Insbesondere ist es Aufgabe der vorliegenden Erfindung, eine Methode zur verbesserten Verknüpfung von elektrischen (ECAD-) und mechanischen (MCAD-) Daten bei der Planung und Durchführung von Anlagen wie industriellen Automatisierungsanlagen bereitzustellen.

Gegenstand der Erfindung ist ein Verfahren mit den Merkmalen des Anspruchs 1, ein Computerprogramm mit den Merkmalen des Anspruchs 14 sowie eine Vorrichtung mit den Merkmalen des Anspruchs 15. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Computerprogramm sowie der erfindungsgemäßen Vorrichtung, und jeweils umgekehrt, so dass bezüglich der Offenbarung der Erfindung stets auch eine wechselseitige Bezugnahme möglich ist.

Gegenstand der Erfindung ist insbesondere ein Verfahren, vorzugsweise ein computerimplementiertes Verfahren, zum computer-gestützten Abgleichen von mindestens zwei unterschiedlichen Darstellungsvarianten einer industriellen, insbesondere elektrischen, Anlage, insbesondere einer elektrischen Maschine und/oder einer industriellen Automatisierungsanlage. Beispiele für eine solche industrielle und insbesondere elektrische Anlage sind eine Automatisierungsanlage wie ein elektrisches Steuerungssystem, ein elektrisches Mess- und Regelungssystem oder ein elektrisches Antriebssystem sowie eine Förder- und/oder Fertigungsanlage. Die industrielle Anlage kann ferner eine hydraulische oder eine pneumatische oder eine fluide oder eine mechanische Anlage sein. Bei der Anlage können entsprechend - automatisiert gesteuert - Flüssigkeiten oder Gase durch Rohrleitungen oder Ventile transportiert oder ein Kühlmittel zugeführt werden oder mechanische Kräfte auf ein Objekt ausgeübt werden, um eine gewünschte Funktion bereitzustellen. Beispiele für solche Anlagen sind eine hydraulische Presse, eine pneumatische Förderanlage, eine fluide Kühlanlage oder eine mechanische Fertigungsmaschine. Ein Schaltplan kann in diesen Fällen angeben, wie die elektrische, hydraulische, pneumatische, fluide oder mechanische Anlage aufgebaut ist und wie die verschiedenen Komponenten miteinander verbunden/verschaltet sind, um eine gewünschte Funktion auszuführen.

Die Anlage ist bspw. als eine industrielle Automatisierungsanlage oder eine elektrische Maschine oder eine Produktionsanlage oder eine Fertigungslinie ausgebildet. Dabei kann die Anlage mehrere Komponenten aufweisen, z. B. Geräte (insbesondere Betriebsmittel) wie Aktoren oder Sensoren oder Steuerungen oder Antriebe oder Schaltanlagen oder dergleichen. Optional können auch Verbindungsmittel wie Kabel oder Steckverbinder oder dergleichen als Komponenten der Anlage verstanden werden.

Gemäß dem erfindungsgemäßen Verfahren kann als ein Verfahrensschritt vorgesehen sein: Bereitstellen einer Komponentenspezifikation aus einer ersten Darstellungsvariante der Anlage. Die Komponentenspezifikation spezifiziert dabei bspw. eine reale Komponente, insbesondere durch eine ein- oder eineindeutige Kennzeichnung wie eine Betriebsmittelkennzeichnung (BMK) oder dergleichen oder durch eine Position in einem 3D-Modell. Je nach Ausgangspunkt kann die Komponentenspezifikation auch lediglich eine Information sein, die zwar auf eine bestimmte Komponente der Anlage hinweist, wobei aber noch weitere Informationen notwendig sein können, um die Komponente eindeutig zuordnen zu können. In diesem Fall ist die Komponentenspezifikation z. B. eine Position in einem 3D-Modell oder eine Abbildung der Komponente oder eine räumliche Information wie ein Einbauort, insbesondere im Vergleich zur Baugruppe und/oder zu umliegenden Komponenten, oder Metadaten einer Datei mit der entsprechenden Darstellung. Des Weiteren kann die Komponentenspezifikation auch eine Information sein, die in wenigstens einer der Darstellungsvarianten noch nicht verfügbar ist, und die zur eindeutigen Zuordnung zu der Komponente notwendig sein kann. Die Komponentenspezifikation kann dabei vorzugsweise ermittelt werden aus einer BMK und/oder einer Bezeichnung und/oder einer Abbildung der Geometrie der Komponente und/oder eine Größe und/oder auch einer Art (elektrisch oder nicht-elektrisch, Vorhandensein von elektrischen Anschlüssen) und/oder einer Anschlusskonfiguration (auch eine Parität der Anschlüsse, also gerade oder ungerade Anzahl der Anschlüsse) der Komponente.

Gemäß dem erfindungsgemäßen Verfahren kann als ein weiterer Verfahrensschritt vorgesehen sein: Bereitstellen von Zuordnungskandidaten aus einer zweiten Darstellungsvariante für eine Zuordnung der bereitgestellten Komponentenspezifikation.

Zusätzlich zur ersten Darstellungsvariante kann somit auch eine zweite Darstellungsvariante vorgesehen sein. Auch können ggf. weitere Darstellungsvarianten vorgesehen sein. Dabei kann eine der (ersten oder zweiten oder weiteren) Darstellungsvarianten eine elektrische Darstellung der Anlage (oder eine mechanische oder hydraulische oder pneumatische oder fluide Darstellung der Anlage) und die/eine andere der (ersten oder zweiten oder weiteren) Darstellungsvarianten eine mechanische Darstellung der Anlage (oder eine elektrische oder hydraulische oder pneumatische oder fluide Darstellung der Anlage) sein. Die erste Darstellungsvariante kann sich somit von der zweiten Darstellungsvariante und/oder den weiteren Darstellungsvarianten der Anlage unterscheiden. Die elektrische Darstellung kann im Folgenden auch als elektrische Darstellungsvariante und die mechanische Darstellung als mechanische Darstellungsvariante bezeichnet werden. Weiter kann die erste Darstellungsvariante auch ggf. verkürzt als erste Darstellung und die zweite Darstellungsvariante verkürzt als zweite Darstellung bezeichnet werden.

Ferner kann es bei dem Bereitstellen der Komponentenspezifikation aus der ersten Darstellungsvariante der Anlage vorgesehen sein, dass die erste Darstellungsvariante sich von der zweiten (und/oder den weiteren) Darstellungsvariante(n) der Anlage dadurch unterscheidet, dass zumindest ein Teil der Anlage mit unterschiedlicher Funktionsweise und/oder Charakteristik (als in der zweiten/weiteren Darstellungsvariante/n) dargestellt wird. Dabei ist insbesondere eine der Darstellungsvarianten eine elektrische Darstellung der Anlage und/oder die andere der Darstellungsvarianten eine mechanische oder hydraulische oder geometrische oder pneumatische oder fluide Darstellung der Anlage. Allgemeiner ausgedrückt ist es möglich, dass die erste und zweite und ggf. weitere der Darstellungsvarianten unterschiedliche der folgenden sind: eine elektrische oder mechanische oder geometrische oder hydraulische oder pneumatische oder fluide Darstellung der Anlage. Dabei können insbesondere in der elektrischen Darstellung die elektrische Funktionsweise und die elektrische Charakteristik (z. B. elektrische Eigenschaften oder die elektrischen Verbindungen) und in der mechanischen Darstellung die mechanische Funktionsweise und/oder die geometrische und räumliche Charakteristik und in der hydraulischen Darstellung die hydraulische Funktionsweise und in der pneumatischen Darstellung die pneumatische Funktionsweise dargestellt werden. Die Funktionsweise kann sich dabei auf eine automatisierte Funktion wie eine Steuerung und/oder Überwachung der Anlage beziehen. Weiter ist es insbesondere nicht ausgeschlossen, dass in einer der Darstellungsvarianten auch Aspekte einer der anderen Darstellungsvarianten vorkommen (z. B. elektrische Verbindungen in der mechanischen Darstellung oder umgekehrt mechanische oder geometrische Aspekte der mechanischen Darstellung in der elektrischen Darstellung).

Der elektrische Aufbau der Anlage ist insbesondere in elektrischen Darstellungen wie ECAD-Schaltplänen vorgesehen, der mechanische Aufbau entsprechend in mechanischen Darstellungen wie MCAD, z. B. in dreidimensionalen geometrischen Modellen. Die Komponenten der Anlage können zumindest teilweise in Baugruppen unterteilt sein, wobei es ggf. unterschiedliche mechanische und elektrische Baugruppen geben kann. Auch die Angabe der Baugruppen kann dabei eine (Zusatz-) Information in der jeweiligen Darstellungsvariante sein.

Die bereitgestellten Zuordnungskandidaten können wie die Komponentenspezifikation eine reale (vorhandene und/oder geplante) Komponente der Anlage spezifizieren. Einer der bereitgestellten Zuordnungskandidaten kann dabei ggf. die gleiche Komponente der Anlage spezifizieren, die auch durch die Komponentenspezifikation spezifiziert wird. Allerdings kann es zunächst unbekannt sein, welche der Zuordnungskandidaten dies ist, diese sind somit zunächst nur "mögliche" Kandidaten oder auch Matches für die Zuordnung. Dabei kann es eine Aufgabe des Verfahrens sein, eine Zuordnung der Komponentenspezifikation aus der ersten Darstellungsvariante zu einem "zugehörigen" der Zuordnungskandidaten aus der zweiten Darstellungsvariante, welcher die gleiche Komponente spezifiziert, vorzunehmen.

Das Bereitstellen der Komponentenspezifikation und/oder der Zuordnungskandidaten kann bspw. durch eine grafische Benutzeroberfläche oder eine andere Schnittstelle durch einen Benutzer als Auswahl vorgenommen werden. Darüber hinaus sind auch weitere Schnittstellen zur Bereitstellung denkbar, wie die Verwendung von Augmented Reality Geräten. Der Benutzer gibt bspw. an, durch die Auswahl der Komponentenspezifikation, welcher Komponente er in der jeweils anderen Darstellungsvariante suchen möchte. Die Zuordnungskandidaten können dann z. B. zumindest teilweise manuell und/oder zumindest teilweise automatisch ausgewählt und somit bereitgestellt werden.

Gemäß dem erfindungsgemäßen Verfahren kann als ein weiterer Verfahrensschritt vorgesehen sein: Bereitstellen von Zusatzinformationen zu der bereitgestellten Komponentenspezifikation und/oder den bereitgestellten Zuordnungskandidaten sowohl aus der ersten als auch aus der zweiten Darstellungsvariante (und/oder auch aus den weiteren Darstellungsvarianten). Die Zusatzinformationen können z. B. räumliche Informationen und/oder Informationen über Verbindungspartner und/oder Informationen über die Art und/oder Position der Darstellung und/oder technische Eigenschaften und/oder Bezeichnungen der durch die Komponentenspezifikation bzw. den Zuordnungskandidaten spezifizierten Komponenten umfassen.

Gemäß dem erfindungsgemäßen Verfahren kann als ein weiterer Verfahrensschritt vorgesehen sein: Auswerten der Zusatzinformationen gemäß wenigstens einem Zuordnungskriterium, wobei das Auswerten vorzugsweise automatisiert und/oder computer-gestützt durchgeführt wird. Weiter kann das Auswerten ggf. durch ein schrittweises und/oder iteratives Vergleichen der Zusatzinformationen gemäß verschiedenen Zuordnungskriterien erfolgen. Dies kann zur schrittweisen Eliminierung der Zuordnungskandidaten führen, sodass am Ende nur noch einer der Zuordnungskandidaten verbleibt, der am wahrscheinlichsten die gleiche Komponente wie die Komponentenspezifikation spezifiziert.

Gemäß dem erfindungsgemäßen Verfahren kann als ein weiterer Verfahrensschritt vorgesehen sein: Zuordnen der bereitgestellten Komponentenspezifikation - zumindest teilweise automatisiert - zu einem der bereitgestellten Zuordnungskandidaten, insbesondere dem verbliebenen Zuordnungskandidaten, auf Basis des Auswertens. Die Zuordnung kann z. B. durch zumindest einen Verweis auf den verbliebenen Zuordnungskandidaten erfolgen, im Folgenden insbesondere auch als Verknüpfung, vorzugsweise Mechanisch-elektrische-Verknüpfung und/oder Elektrisch-hydraulische- und/oder Elektrisch-pneumatische- und/oder Elektrisch-fluidtechnische-Verknüpfung, bezeichnet. Die Verknüpfung kann je nach Darstellungsvariante auch eine mechanisch-hydraulische, mechanisch-pneumatische, mechanisch-fluidtechnische Verknüpfung oder dergleichen sein.

Die Zusatzinformationen können bspw. umfassen und/oder basieren auf: einer Bezeichnung und/oder einer Abbildung der Geometrie einer Komponente und/oder einer Größe und/oder auch einer Art und/oder einer Anschlusskonfiguration und/oder eines örtlichen Einbauorts, z. B. in Relation zur Baugruppe, der Komponente.

Es kann weiter möglich sein, dass auf Basis der vorgenommenen Zuordnung zumindest eine Installationsangabe, insbesondere eine Installationsanweisung (insbesondere für einen Benutzer), vorzugsweise zumindest ein Teil eines Installationsplans, bevorzugt für wenigstens eine Installationshandlung und/oder -vorbereitung bei einer Wartung und/oder einem Aufbau der Anlage automatisiert erzeugt wird. Die Installationsangabe kann dabei einen elektrischen und einen mechanischen Teil umfassen. Es ist bspw. möglich, dass ein elektrischer Teil der Installationsangabe (z. B. eine Anweisung wie "Verbinde Komponente 1 mit Komponente 2 über ein Kabel") anhand der elektrischen Darstellung und ein mechanischer Teil der Installationsangabe (z. B. eine Anweisung wie "Verwende hierzu eine Kabellänge xy") anhand der mechanischen Darstellung erzeugt wird. Um den zu einer Komponente, die in der elektrischen Darstellung dargestellt ist, den passenden mechanischen Teil der Installationsangabe zu finden, kann die durch das erfindungsgemäße Verfahren ermittelte Zuordnung genutzt werden.

Das erfindungsgemäße Verfahren kann daher den Vorteil haben, dass die Planung und Durchführung einer Installation und/oder Wartung einer industriellen Automatisierungsanlage verbessert werden können, indem die elektrische und mechanische Darstellung miteinander verknüpft wird. Die hierzu durch das Verfahren vorgenommene Zuordnung ermöglicht es, automatisiert Installationspläne zu erstellen und den Benutzer bei der Installation der Anlage anzuleiten. Die Zuordnung kann sowohl in der Planungsphase zur Vorbereitung des Anlagenbaus als auch nach der Planungsphase zur Wartung der Anlage genutzt werden. Durch die Verknüpfung der räumlichen und elektrischen Informationen entsteht insbesondere eine Mechanisch-elektrische-Verknüpfung, die eine effiziente und automatisierte Planung und Durchführung der Installation und Wartung der Anlage ermöglicht.

Weiter ist es bei dem erfindungsgemäßen Verfahren denkbar, dass durch die vorgenommene Zuordnung eine Verknüpfung, insbesondere Mechanisch-elektrische-Verknüpfung, aus den unterschiedlichen Darstellungen, insbesondere der mechanischen und elektrischen Darstellung, vorzugsweise von MCAD- und ECAD-Daten, automatisiert erzeugt wird. Die Verknüpfung, insbesondere Mechanisch-elektrische-Verknüpfung, ist bspw. als ein digitaler Verweis ausgebildet, welcher von der einen Darstellungsvariante auf die andere Darstellungsvariante verweist und ggf. gemeinsam mit diesen Darstellungsvarianten abgespeichert werden kann. Auf Basis dieser Verknüpfung bzw. Mechanisch-elektrischen-Verknüpfung kann eine vorhandene Installationsinformation um eine zusätzliche, insbesondere eine elektrische und/oder räumliche, Information über die Anlage ergänzt werden. Dabei kann aus der (auf diese Weise) ergänzten Installationsinformation die zumindest eine Installationsangabe, vorzugsweise für den Installationsplan und/oder in Form einer Schritt-für-Schritt-Anweisung, automatisiert erzeugt werden, um einen Benutzer für die wenigstens eine Installationshandlung und/oder -vorbereitung computer-gestützt anzuleiten. Hierzu kann eine visuelle und/oder akustische Ausgabe der Installationsangabe erfolgen, bspw. visuell über einen Bildschirm und/oder Augmented Reality und/oder akustisch über einen Lautsprecher.

Vorteilhafterweise kann im Rahmen der Erfindung vorgesehen sein, dass die zumindest eine Installationsangabe eine Navigationsinformation für die Anlage umfasst, um den Benutzer von einem ersten Ort, insbesondere für eine erste Installationshandlung, zu einem zweiten Ort, insbesondere für eine zweite Installationshandlung, der Anlage zu navigieren. Dabei kann die Navigationsinformation vorzugsweise einen berechneten Weg umfassen, welchen den Benutzer vom ersten zum zweiten Ort der Anlage führt. Weiter kann der Weg bei der Berechnung hinsichtlich der Weglänge und/oder Installationsdauer des Aufbaus und/oder der Wartung und/oder der Installationshandlungen anhand der Verknüpfung bzw. Mechanisch-elektrischen-Verknüpfung optimiert werden. Damit kann der Vorteil erzielt werden, dass sich ein weiterer Nutzen der räumlichen Information für die praktische Arbeit in der Anlage ergibt, um bspw. Wege zu berechnen, wie am schnellsten die Installation durchgeführt werden kann.

Es kann weiter vorgesehen sein, dass eine einheitliche Datenstruktur geschaffen wird, die sowohl ECAD- als auch MCAD-Daten beinhaltet. Diese Datenstruktur ermöglicht eine automatisierte Verknüpfung der Daten und eine einheitliche Darstellung der Informationen. Dabei ist es möglich, dass die Datenstruktur genutzt wird, um die Verknüpfung bzw. Mechanisch-elektrischen-Verknüpfung digital und nicht-flüchtig abzuspeichern. Bspw. wird auf diese Weise der Schaltplan der elektrischen Darstellung um eine räumliche Information der mechanische Darstellung ergänzt.

Ein weiterer Vorteil kann im Rahmen der Erfindung erzielt werden, wenn die zumindest eine Installationsangabe mehrere Schritt-für-Schritt-Anweisungen umfasst, welche insbesondere die zum Aufbau und/oder zur Wartung notwendigen Installationshandlungen für den Benutzer anleiten. Dabei können die Schritt-für-Schritt-Anweisungen ggf. hinsichtlich einer Vereinfachung und/oder Beschleunigung und/oder Effizienz und/oder Logistik automatisiert optimiert werden, bevorzugt unter Berücksichtigung zumindest einer der folgenden Angaben:
- einer Erfahrungsangabe über den Benutzer,
- einer Ortsangabe über wenigstens eine Komponente der Anlage, welche aus der ergänzten räumlichen Information ermittelt wird,
- einer Inventarinformation,
- einer Verfügbarkeitsinformation über zu bestellende Komponenten, wobei hierzu eine Datenbankschnittstelle verwendet wird.

Auf diese Weise ist eine Optimierung der Installation möglich. Das durch die Zuordnung erzeugte Wissen "welche Komponente befindet sich wo" kann ferner für eine optimale Logistik verwendet werden. Auch die Benutzererfahrung (Skill-Level) kann bei Installationsanweisungen berücksichtigen werden.

Vorteilhafterweise kann bei der Erfindung vorgesehen sein, dass die zumindest eine Installationsangabe eine oder mehrere Kabellängen für eine Kabellängenplanung angibt. Dabei kann für eine automatisierte Erzeugung der einen oder mehreren Kabellängen auf Basis der Verknüpfung bzw. Mechanisch-elektrischen-Verknüpfung ein Vergleich von räumlichen Positionen von zu verbindenden Komponenten der Anlage erfolgen, um eine benötigte Kabellänge zur Verbindung der Komponenten zu ermitteln, insbesondere zu schätzen. Auf diese Weise kann "in erster Iteration" automatisiert ermittelt werden, welche Kabellänge passend ist, um zwei Komponenten miteinander zu verbinden. Hierzu können die räumlichen Positionen der Komponenten verglichen werden, die dank der automatischen Zuordnung bekannt sind. Da es sich hierbei nur um eine erste Näherung handelt, können anschließend ggf. zur finalen Anpassung der Länge des Kabels Montage-/Kabelschleifen verwenden werden. Anschließend kann die Kabellänge ggf. auch nach der Installation im Plan (z. B. der elektrischen oder mechanischen Darstellung) aktualisiert werden.

Bevorzugt kann im Rahmen der Erfindung vorgesehen sein, dass die zumindest eine Installationsangabe eine Angabe von wenigstens einer Schnittstelle, insbesondere einer vorgesehenen Kabelverbindung, zwischen zu verbindenden Komponenten der Anlage umfasst. Dabei kann die Angabe der wenigstens einen Schnittstelle dadurch automatisiert erzeugt werden, dass auf Basis der Verknüpfung bzw. Mechanisch-elektrischen-Verknüpfung solche Schnittstellen der Anlage gesucht und/oder gefiltert und/oder ausgewählt werden, bei denen die zu verbindenden Komponenten in verschiedenen mechanischen Baugruppen der Anlage gemäß der mechanischen Darstellung (ggf. aber in gleichen elektrischen Baugruppen der Anlage gemäß der elektrischen Darstellung) vorgesehen sind. Insbesondere bei einer modularen Bauweise der Anlage sollen/dürfen unterschiedlichen Baugruppen nicht direkt miteinander über Kabel verbunden sein, sondern werden über Brücken verbunden, um eine Montage der Kabel der jeweiligen Module zu erleichtern. Es kann sein, dass mehrere Komponenten zwar in der gleichen elektrischen Baugruppe, aber unterschiedlichen mechanischen Baugruppen vorgesehen sind. Dank der Zuordnung können solche Verbindungen identifiziert und automatisiert Brücken hierfür eingeplant werden.

Gemäß einer vorteilhaften Weiterbildung der Erfindung kann vorgesehen sein, dass die zumindest eine Installationsangabe eine oder mehrere Kabeltypen für eine Kabelplanung angibt, wobei vorzugsweise für die automatisierte Erzeugung der einen oder mehreren Kabeltypen auf Basis der Verknüpfung bzw. Mechanisch-elektrischen-Verknüpfung ein Vergleich von räumlichen Positionen von zu verbindenden Komponenten der Anlage erfolgt, um einen benötigten Kabeltyp zur Verbindung der Komponenten zu ermitteln. Auf diese Weise kann die Wartung und Installation verbessert und vereinfacht werden.

Vorzugsweise kann vorgesehen sein, dass eine automatisierte Bilderkennung wenigstens eines Objekts, insbesondere Komponente der Anlage, durchgeführt wird, um als Ergebnis der Bilderkennung die wenigstens eine Komponente, insbesondere wenigstens ein Gerät, der Anlage vorzugsweise auf einer Aufzeichnung wie einer Fotografie oder einem Video oder dergleichen, zu erkennen. Dabei kann das Ergebnis der Bilderkennung vorzugsweise zur Bereitstellung der Komponentenspezifikation verwendet werden, um insbesondere die jeweilige erkannte Komponente einem der bereitgestellten Zuordnungskandidaten automatisiert zuzuordnen. Die Bilderkennung kann somit als Vorbereitungsschritt dienen, um die Komponentenspezifikation bereitzustellen. Mit anderen Worten kann die Bilderkennung dazu genutzt werden, die zu matchende Komponente auszuwählen. Hierbei kann die erste Darstellungsvariante auch entsprechend als die Fotografie oder das Video oder eine andere Aufzeichnung aufgefasst werden, welches somit auch als die mechanische Darstellung vorgesehen sein kann.

Es ist ferner denkbar, dass der Schritt des Bereitstellens der Zusatzinformationen zu der bereitgestellten Komponentenspezifikation und den bereitgestellten Zuordnungskandidaten eine automatisierte Bilderkennung umfasst, um als Ergebnis der Bilderkennung wenigstens eine Komponente, insbesondere ein Gerät, und/oder eine Position der Komponente in der Anlage auf einer Aufzeichnung wie einer Fotografie oder einem Video zu erkennen. Dabei kann das Ergebnis der Bilderkennung als eine der Zusatzinformationen verwendet werden. Hier kann die Bilderkennung insbesondere dazu genutzt werden, die Zusatzinformationen für die Zuordnungskandidaten zu ermitteln. Bspw. wird anstelle oder zusätzlich zu einem 3D-Modell die Aufzeichnung herangezogen, um die räumliche Information zu erhalten. Hierbei kann die zweite Darstellungsvariante entsprechend die Aufzeichnung wie eine Fotografie sein.

Optional kann es vorgesehen sein, dass die jeweilige Bilderkennung den nachfolgenden Schritt umfasst: Erkennen der Komponente, insbesondere aus der ersten oder zweiten Darstellungsvariante in der Form einer Aufzeichnung wie einer Fotografie und/oder eines Videos und/oder einer 3D-Darstellung und/oder einer Schemata-Darstellung, insbesondere PDF oder Skizze, der Anlage, anhand
- Einer, vorzugsweise im Bild und/oder in Metadaten einer Datei, dargestellten Artikelnummer und/oder Kennzeichnung, und/oder
- einer im Bild dargestellten Kodierung der elektrischen Komponente, insbesondere eines Steckverbinders, z. B. L-kodiert, A-kodiert, oder dergleichen, und/oder
- der visuellen geometrischen Abbildung der Komponente, insbesondere durch einen Abgleich der Abbildung mit vorgegebenen und/oder vorhandenen Abbildungen von Komponenten der Anlage.

Dies hat den Vorteil, dass eine zuverlässige Erkennung der Komponente anhand der Aufzeichnung möglich wird.

Vorteilhaft ist es zudem, wenn die bereitgestellte Komponentenspezifikation und die bereitgestellten Zuordnungskandidaten jeweils zumindest eine reale bereits vorhandene oder geplante Komponente der Anlage spezifizieren. Dabei kann die Zusatzinformationen lediglich einen, insbesondere zusätzlichen, Hinweis zur Identifizierung der durch die Zuordnungskandidaten spezifizierten realen Komponenten bereitstellen. Mit anderen Worten kann die Spezifizierung der Komponente durch die Zuordnungskandidaten zunächst zu ungenau sein und erst durch die Zusatzinformationen weiter eingegrenzt werden.

Weiter kann die Komponentenspezifikation die reale (geplante oder bereits vorhandene) Komponente hingegen über eine Kennzeichnung wie eine Betriebsmittelkennzeichnung eindeutig oder eineindeutig spezifizieren. Dabei können ggf. bei dem Auswerten die Zusatzinformationen gemäß dem wenigstens einen Zuordnungskriterium automatisiert verglichen werden, um zumindest schätzungsweise den zur Komponentenspezifikation zugehörigen Zuordnungskandidaten zu ermitteln, welcher die gleiche reale Komponente wie die Komponentenspezifikation spezifiziert. Dies ermöglicht es, bei dem Zuordnen die Komponentenspezifikation zu diesem ermittelten Zuordnungskandidaten zuzuordnen.

Es ist ferner denkbar, dass die Zusatzinformationen zumindest teilweise für die räumliche Anordnung der realen Komponenten und/oder der damit verbundenen und/oder benachbarten Komponenten, insbesondere Verbindungspartner, in der Anlage spezifisch sind. Dabei kann bei dem Auswerten gemäß einem des wenigstens einen Zuordnungskriteriums die Zusatzinformationen hinsichtlich der räumlichen Anordnung automatisiert verglichen werden, um den zugehörigen Zuordnungskandidaten zu ermitteln.

Weiter ist es möglich, dass zumindest eine der Zusatzinformationen, die für die räumliche Anordnung der realen Komponenten in der Anlage spezifisch sind, eine Angabe der Schaltplanseite in der elektrischen Darstellung ist, auf welcher eine Komponente dargestellt ist, und bei dem Auswerten gemäß einem des wenigstens einen Zuordnungskriteriums eine gleiche Schaltplanseite von Komponenten eine räumliche Nähe indiziert.

Mit anderen Worten kann es möglich sein, eine oder mehrere Gerätegruppen anhand der jeweiligen Schaltplanseite zu clustern, da alles, was räumlich in der Anlage nahe beieinander liegt, erfahrungsgemäß auf derselben Schaltplanseite zu finden ist. Die Erkennung der "gleichen Seite" kann daher auch eine der Zusatzinformationen darstellen. Die Schaltplanseite kann daher als Indikation für die räumliche Nähe betrachtet werden. Alternativ kann die eine oder mehrere Gerätegruppen auch über mehr als eine Schaltplanseite geclustert werden. Dies könnte auch für eine Schwerpunktberechnung von Bedeutung sein, wie sie im Folgenden noch näher beschrieben wird. Es gibt darüber hinaus auch spezielle Gruppierungen für Betriebsmittelkennzeichen, die für eine Clusterung verwendet werden können.

Des Weiteren ist es denkbar, dass die Komponentenspezifikation eine Kennzeichnung wie eine Betriebsmittelkennzeichnung umfasst, durch welche die reale Komponente eindeutig oder eineindeutig in einer der Darstellungen, vorzugsweise der elektrischen Darstellung, identifiziert wird. Unter einer eineindeutigen Kennzeichnung wird dabei insbesondere verstanden, dass jeder realen Komponente genau eine eindeutige elektrische Darstellung zugeordnet wird, welche insbesondere auch für Bauteile unterschiedlicher Hersteller eindeutig ist. Dadurch wird eine klare Zuordnung zwischen der realen Komponente und ihrer elektrischen Darstellung gewährleistet, was insbesondere bei der Fehlersuche und Wartung der Anlage von großem Vorteil ist.

Weiter ist es bei dem erfindungsgemäßen Verfahren denkbar, dass die Komponentenspezifikation zumindest eine der folgenden Angaben als die Kennzeichnung umfasst: eine Artikelnummer, eine Seriennummer, eine MAC-Adresse, einen Komponentennamen, eine IO-Link Beschreibung, einen IO-Link Namen, einen gerätespezifischen Tag (Device-specific Tag), einen Herstellernamen. Dies ermöglicht die Zuordnung von "Soll- und Ist". Dabei ist es bei unterschiedlichen Bussystemen ggf. nur möglich, entweder die MAC-Adresse oder die Seriennummer auszulesen, sodass ggf. beide für die Kennzeichnung vorgesehen sein können.

Auch ist es optional denkbar, dass der jeweilige Zuordnungskandidat eine reale Komponente der Anlage nur ungenau spezifiziert. Hierzu kann der Zuordnungskandidat oder eine der Zusatzinformationen eine Position für die Komponente in einem dreidimensionalen Modell in der mechanischen Darstellung angeben.

Bevorzugt kann die Auswertung zumindest teilweise auf einer Analyse basieren:
- welche Komponenten der Anlage als Verbindungspartner benachbart an dieser Position in der mechanischen Darstellung dargestellt sind, und/oder
- in welcher Weise die Verbindungspartner in der elektrischen Darstellung dargestellt sind, und/oder
- wie diese in Relation mit der Komponentenspezifikation stehen, vorzugsweise ob sie auf der gleichen Schaltplanseite dargestellt sind.

Dabei kann die gleiche Schaltplanseite ein Indikator für eine räumliche Nähe sein und somit zur zuverlässigeren Zuordnung genutzt werden.

Es kann optional möglich sein, dass das Auswerten ein automatisiertes und/oder schrittweises und/oder iteratives Vergleichen der Zusatzinformationen anhand von mindestens zwei oder mindestens drei oder mindestens vier Zuordnungskriterien umfasst, um schrittweise die Zuordnungskandidaten zu eliminieren. Damit kann eine zuverlässigere Zuordnung möglich sein.

Vorzugsweise kann vorgesehen sein, dass die jeweilige Zusatzinformation zumindest eine der folgenden Angaben umfasst:
- eine Angabe von Verbindungspartnern der realen Komponente, die durch die Komponentenspezifikation oder durch den jeweiligen Zuordnungskandidaten spezifiziert wird, und/oder
- eine Position der realen Komponente in der Anlage, und/oder
- technische Eigenschaften der realen Komponente.

Dabei kann bei dem Auswerten ein räumlicher Schwerpunkt der Verbindungspartner ermittelt werden (Schwerpunktberechnung), und der räumliche Schwerpunkt mit den Positionen der Zuordnungskandidaten verglichen werden, um auf Basis dieses Vergleichs einen Teil der Zuordnungskandidaten zu eliminieren. Der am Ende verbliebene Zuordnungskandidat kann dabei derjenige sein, welcher räumlich optimal an den Verbindungspartnern räumlich angeordnet ist. Dies kann ein Hinweis auf eine zu matchende Komponente, aber auch für die Einplanung eines Verteilers für die Verbindungspartner an dieser Position sein. Dabei werden unter Verbindungspartnern insbesondere solche Geräte (andere Komponenten) bezeichnet, die elektrisch unmittelbar mit einer Komponente verbunden sind.

Von weiterem Vorteil kann vorgesehen sein, dass das Zuordnen der bereitgestellten Komponentenspezifikation zu dem einen der Zuordnungskandidaten auf Basis des Auswertens erfolgt, um die geplante Komponente, insbesondere einen Verteiler, an welchem ein oder mehrere der durch die Komponentenspezifikation spezifizierten realen Komponenten und/oder Verbindungspartner angeschlossen werden sollen, entsprechend der Spezifikation des Zuordnungskandidaten, insbesondere einer räumlichen Position, in der Anlage zu installieren. Damit kann die beschriebene Schwerpunktberechnung dazu dienen, gemäß einer heuristischen Zuordnung eine günstige Position für einen Verteiler in der Anlage in der Planungsphase der Anlage zu ermitteln. Und auch nach der Planungsphase kann die beschriebene Schwerpunktberechnung verwendet werden, um die Zuordnung zu einem vorhandenen Verteiler vorzunehmen. Weiter kann die Schwerpunktberechnung auch zur Zuordnung oder Überprüfung von technischen Eigenschaften einer Komponente und/oder Ihrer (existierenden) Verschaltung mit einem Verteiler dienen, um eine Dimensionierung und/oder Verschaltung der Komponente anzupassen. Technische Eigenschaften der Komponente können dabei beispielsweise Angaben zum Typ einer Komponente, Angaben zur Dimensionierung einer Komponente wie z.B. eine Angabe zur Abmessung der Komponente bezüglich seiner Länge, Breite und/oder Höhe sein.

Optional kann die Schwerpunktberechnung auch dazu dienen, dass eine Zuordnung einer Komponentenspezifikation zu Zuordnungskandidaten in verschiedenen geclusterten Gruppen ermöglicht wird, wobei eine oder mehrere Zusatzinformationen der jeweiligen Zuordnungskandidaten aus den jeweiligen Gruppen und deren jeweiligen Schwerpunkten verwendet werden können.

Im Rahmen der Erfindung kann als ein Verteiler ein Modul bezeichnet werden, welches zur dezentralen Verschaltung von Komponenten wie Aktoren, Sensoren und Maschinen in der Anlage dient. Dabei kann der Verteiler bspw. als ein Feldbusmodul ausgebildet sein, welches über einen Feldbus mit einer zentralen Steuerung wie einer SPS
(Speicherprogrammierbaren Steuerung) verbunden ist. Feldbusmodule ermöglichen damit die Kommunikation zwischen der Steuerung und den Komponenten unter Verwendung eines Feldbusprotokolls wie PROFIBUS, PROFINET, CANopen oder EtherCAT. Es können an dem Verteiler mehrere Komponenten angeschlossen sein, ggf. auch über IO-Link und insbesondere, um in Abhängigkeit von einem empfangenen Feldbussignal die Komponenten anzusteuern und/oder auszulesen. Eine weitere mögliche Variante eines Verteilers kann ggf. auch direkt ein elektrisches Steuersignal und/oder Sensorsignal zwischen der zentralen Steuerung und der Komponente weiterleiten. Ferner kann der Verteiler als ein I/O-Modul ausgebildet sein, bei dem die angeschlossenen Komponenten nicht oder nicht nur über einen Feldbus, sondern (auch) über digitale oder analoge Ein- und Ausgänge über den Verteiler mit der Steuerung verbunden werden. Der Verteiler dient damit als Schnittstelle zwischen Steuerung und Komponenten wie Sensoren, Aktoren und Maschinen und kann eine Umwandlung und Verarbeitung von Signalen aus der Steuerung in für die Komponenten nutzbare Signale und umgekehrt vornehmen.

In einer weiteren Möglichkeit kann vorgesehen sein, dass bei dem Auswerten zunächst
- gemäß einem ersten Zuordnungskriterium eine erste Zusatzinformation, insbesondere eine Baugruppenkennzeichnung, der bereitgestellten Komponentenspezifikation und der bereitgestellten Zuordnungskandidaten (gemäß einem ersten Vergleich) verglichen wird, um einen Teil der Zuordnungskandidaten auf Basis des ersten Zuordnungskriteriums zu eliminieren, und/oder anschließend
- gemäß einem zweiten Zuordnungskriterium eine zweite Zusatzinformation, insbesondere eine Artikelnummer, der bereitgestellten Komponentenspezifikation und der (nach dem ersten Vergleich) verbleibenden Zuordnungskandidaten (gemäß einem zweiten Vergleich) verglichen wird, um einen weiteren Teil der Zuordnungskandidaten auf Basis des zweiten Zuordnungskriteriums zu eliminieren, und anschließend
- gemäß einem dritten Zuordnungskriterium eine dritte Zusatzinformation, insbesondere eine Position, der bereitgestellten Komponentenspezifikation und der (nach dem zweiten Vergleich) verbleibenden Zuordnungskandidaten (gemäß einem dritten Vergleich) verglichen wird, um einen weiteren Teil der Zuordnungskandidaten auf Basis des dritten Zuordnungskriteriums zu eliminieren, und anschließend
- gemäß einem n-ten Zuordnungskriterium eine n-te Zusatzinformation der bereitgestellten Komponentenspezifikation und der (nach dem jeweils vorhergehenden Vergleich) verbleibenden Zuordnungskandidaten (gemäß einem n-ten Vergleich) verglichen wird, um einen weiteren Teil der Zuordnungskandidaten auf Basis des n-ten Zuordnungskriteriums zu eliminieren.

Damit kann eine besonders zuverlässige schrittweise Eingrenzung der Zuordnungskandidaten erfolgen.

Vorteilhaft ist es zudem, wenn mehr als die zwei unterschiedlichen Darstellungsvarianten der Anlage, insbesondere mindestens drei oder mindestens vier oder mindestens fünf unterschiedliche Darstellungsvarianten, abgeglichen werden, wobei sich vorzugsweise die erste, die zweite und auch eine dritte und/oder vierte und/oder fünfte Darstellungsvariante und/oder weitere Darstellungsvarianten der Anlage voneinander unterscheiden, wobei bevorzugt die Zuordnungskandidaten und/oder die Zuordnungsinformationen aus den weiteren Darstellungsvarianten bereitgestellt werden. Durch die größere Informationsbasis kann damit eine verbesserte und zuverlässigere Zuordnung ermöglicht werden.

Ferner kann es im Rahmen der Erfindung vorgesehen sein, dass die mechanische Darstellung wenigstens eine der folgenden Darstellungen und/oder Zusatzinformationen umfasst:
- eine MCAD-Darstellung der Anlage,
- ein 3D-Modell der Anlage,
- 3D-Geometrien von Komponenten der Anlage,
- eine Fotografie der Anlage,
- ein Video der Anlage,
- eine PDF-Datei mit mechanischen Informationen über die Anlage,
- Konstruktionsdaten,
- Kinematische Informationen,
- Namen und/oder Bezeichnungen und/oder Meta-Information zu den Komponenten der Anlage,
- eine Stückliste,
- eine Teileliste,
- schematische Zeichnungen,
- eine Textdatei,
- Anschlussinformationen, wie eine Anschlusscodierung,
- Anzahl von Ein- und/oder Ausgängen,
- Funktionsbeschreibungen,
- Baugruppenangaben,
- Installationsnotizen,
- eine Liste einer Tabellenkalkulation, insbesondere Excelliste.

Weiter ist es denkbar, dass eine Darstellung, vorzugsweise die elektrische und/oder die pneumatische und/oder die hydraulische und/oder die fluide Darstellung, wenigstens eine der folgenden Darstellungen und/oder Zusatzinformationen umfasst:
- eine ECAD-Darstellung oder eine fluide oder eine Pneumatik-Darstellung der Anlage,
- einen elektronischen Schaltplan,
- ein Verbindungsplan,
- eine Bilddarstellung, insbesondere Fotografie, eines Schaltplans,
- einen Anschlussplan,
- einen Kabelplan oder Schlauchplan,
- schematische Zeichnungen,
- einen Stromlaufplan,
- einen Pneumatikplan oder Fluidplan,
- eine Stückliste,
- Funktionsbeschreibungen,
- Ortsangaben,
- Fotografien,
- Anschlussinformationen, wie eine Anschlusscodierung oder eine Art oder Größe der Anschlüsse,
- Anzahl von Ein- und/oder Ausgängen,
- Baugruppenangaben,
- Installationsnotizen,
- eine PDF-Datei mit elektrischen Informationen über die Anlage,
- eine Teileliste.

Zur Vorbereitung von Daten für das Matching von Komponenten und insbesondere BMKs können ferner die folgenden Schritte vorgesehen sein:
- Ausleiten einer Liste der zu matchenden Komponenten und/oder BMKs aus dem ECAD gemäß einem ersten Vorbereitungsschritt,
- Ausleiten einer Liste der zu matchenden Komponenten und/oder Positionen aus dem MCAD gemäß einem zweiten Vorbereitungsschritt,
- Bereitstellen von Komponenten und/oder Positionen und/oder BMKs, vorzugsweise inklusive Metadaten, für das automatisierte Matchen gemäß einem dritten Vorbereitungsschritt.

Die Metadaten können dabei z. B. die Artikelnummer und/oder die Verbindungspartner und/oder die umliegenden Positionen und/oder technische Eigenschaften einer jeweiligen Komponente umfassen.

Bei der Entwicklung von Anlagen und insbesondere industriellen Automatisierungsanlagen kommen im Wesentlichen zwei verfügbare Werkzeuge in Frage: ECAD und MCAD. ECAD steht für Electronic Computer-Aided Design und MCAD für Mechanical Computer-Aided Design.

Durch ECAD (steht für Electrical Computer-Aided Design) können bspw. Schaltpläne, Stromlaufpläne, Anschlusspläne, aber ggf. auch Kabelpläne und Stücklisten und andere elektrische Dokumentationen dargestellt und verwaltet werden. ECAD bezieht sich dabei auf den Einsatz von computergestützten Tools zur Unterstützung der Planung, Konstruktion und Dokumentation von elektrischen Systemen in industriellen Anlagen. Dabei können in einer Baugruppe die elektrischen Komponenten der Anlage gruppiert werden, insbesondere solche, die zusammen eine bestimmte Funktion erfüllen. Mögliche Kennzeichnungen von Komponenten der Anlage sind bei ECAD die Betriebsmittelkennzeichnung, die Artikelnummer, ein Bereichsname, die Seriennummer und der Herstellercode. Bei ECAD können ferner ggf. auch technische Eigenschaften, insbesondere elektrische Eigenschaften, der Komponenten angegeben sein.

Eine Betriebsmittelkennzeichnung (BMK) ist in diesem Zusammenhang insbesondere eine eindeutige Kennzeichnung von elektrischen Betriebsmitteln der Anlage wie Schaltern, Klemmen, Sensoren, Aktoren, und dergleichen. Die BMK ermöglicht eine eindeutige Zuordnung der Betriebsmittel in Schaltplänen, Stücklisten und anderen technischen Dokumentationen. Sie dient der eindeutigen Identifikation und Zuordnung von Betriebsmitteln und erleichtert so die Wartung, Instandhaltung und Reparatur von industriellen Automatisierungsanlagen.

Durch MCAD (steht für Mechanical Computer-Aided Design) können die Komponenten der industriellen Anlage räumlich dargestellt werden, z. B. durch 3D-Modellierung, Simulation und Baugruppenmodellierung sowie Stücklisten. MCAD bezieht sich insbesondere auf die computergestützte Konstruktion von mechanischen Komponenten und Systemen einer industriellen Anlage. Dabei können ggf. auch 3D-Modelle und Simulationen genutzt werden, um die Funktionalität und Leistungsfähigkeit von Bauteilen und Anlagen zu optimieren. Mögliche Kennzeichnungen der Komponenten der Anlage bei MCAD sind die Baugruppe, der Komponentenname und der Name des Bauteils. Weitere mögliche Kennzeichnungen der Komponenten sind die Seriennummer und der Herstellercode. Auch bei MCAD können ferner ggf. technische und vorzugsweise mechanische Eigenschaften wie die Abmessungen und das Gewicht der Komponenten angegeben sein.

Eine BOM (Bill of Material) bezieht sich insbesondere auf eine Bestell- und/oder Stückliste für den Aufbau einer Anlage. Diese wird vorzugsweise redundanzfrei durch ein Zusammenführen von mechanischen und elektrischen Daten erzeugt, um eine effiziente Wertschöpfungskette zu gewährleisten. Um eine redundanzfreie Bestell- und/oder Stückliste zu erhalten, können insbesondere die MCAD- und ECAD-Stücklisten abgeglichen werden. Es kann möglich sein, dass auf Basis der Zuordnung durch das erfindungsgemäße Verfahren eine BOM erstellt wird.

Ebenfalls Gegenstand der Erfindung ist eine Vorrichtung zur Datenverarbeitung, umfassend Mittel zur Ausführung der Schritte des erfindungsgemäßen Verfahrens. Damit bringt die erfindungsgemäße Vorrichtung die gleichen Vorteile mit sich, wie sie ausführlich mit Bezug auf ein erfindungsgemäßes Verfahren beschrieben worden sind.

Ebenfalls Gegenstand der Erfindung ist ein Computerprogramm, insbesondere Computerprogrammprodukt, umfassend Befehle, die bei der Ausführung des Computerprogrammes durch einen Computer diesen veranlassen, das erfindungsgemäße Verfahren auszuführen. Damit bringt das erfindungsgemäße Computerprogramm die gleichen Vorteile mit sich, wie sie ausführlich mit Bezug auf ein erfindungsgemäßes Verfahren beschrieben worden sind.

Als der Computer kann eine Datenverarbeitungsvorrichtung, bspw. die erfindungsgemäße Vorrichtung, vorgesehen sein, welche das Computerprogramm ausführt. Der Computer kann wenigstens einen Prozessor zur Ausführung des Computerprogramms aufweisen. Auch kann ein nicht-flüchtiger Datenspeicher vorgesehen sein, in welchem das Computerprogramm hinterlegt und von welchem das Computerprogramm durch den Prozessor zur Ausführung ausgelesen werden kann.

Ebenfalls ist es denkbar, dass der Computer zumindest einen integrierten Schaltkreis wie einen Mikroprozessor oder eine Anwendungsspezifische integrierte Schaltung (ASIC) oder ein Anwendungsspezifisches Standardprodukt (ASSP) oder einen digitalen Signalprozessor (DSP) oder einen Field Programmable Gate Array (FPGA) oder dergleichen umfasst. Der Computer kann ferner wenigstens eine Schnittstelle zum Datenaustausch, z. B. eine Ethernet-Schnittstelle oder eine Schnittstelle für LAN (Local Area Network) oder WLAN (Wireless Local Area Network) oder System-on-a-Chip (SoC) oder eine andere Funkschnittstelle wie Bluetooth oder Nahfeldkommunikation (NFC) aufweisen. Ferner kann der Computer als ein oder mehrere Steuergeräte, d. h. auch als ein System aus Steuergeräten, ausgeführt sein. Der Computer kann bspw. auch in einer Cloud und/oder als ein Server vorgesehen sein, um über die Schnittstelle die Datenverarbeitung für eine lokale Anwendung zur Verfügung zu stellen. Auch ist es möglich, dass der Computer als ein mobiles Gerät, wie ein Smartphone, ausgeführt ist.

Ebenfalls Gegenstand der Erfindung kann ein computerlesbares Speichermedium sein, welches das erfindungsgemäße Computerprogramm umfasst. Das Speichermedium ist bspw. als ein Datenspeicher wie eine Festplatte und/oder ein nicht-flüchtiger Speicher und/oder eine Speicherkarte ausgebildet. Das Speichermedium kann z. B. in den Computer integriert sein.

Darüber hinaus kann das erfindungsgemäße Verfahren auch als ein computerimplementiertes Verfahren ausgeführt sein.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Darstellung eines Computerprogrammes, eines Datenverarbeitungsvorrichtung und einer grafischen Benutzeroberfläche gemäß Ausführungsvarianten der Erfindung.
- Fig. 2: eine schematische Visualisierung einer Auswertung eines Verfahrens gemäß Ausführungsvarianten der Erfindung.
- Fig. 3: eine schematische Darstellung eines Teils einer elektrischen Darstellung.
- Fig. 4: eine schematische Visualisierung einer Schwerpunktberechnung bei einem Verfahren gemäß Ausführungsvarianten der Erfindung.
- Fig. 5: eine weitere schematische Visualisierung einer Schwerpunktberechnung bei einem Verfahren gemäß Ausführungsvarianten der Erfindung.
- Fig. 6: schematische Verfahrensschritte eines Verfahrens gemäß Ausführungsvarianten der Erfindung.
- Fig. 7: schematische Verfahrensschritte eines Verfahrens gemäß Ausführungsvarianten der Erfindung.

In den nachfolgenden Figuren werden für die gleichen technischen Merkmale auch von unterschiedlichen Ausführungsbeispielen die identischen Bezugszeichen verwendet.

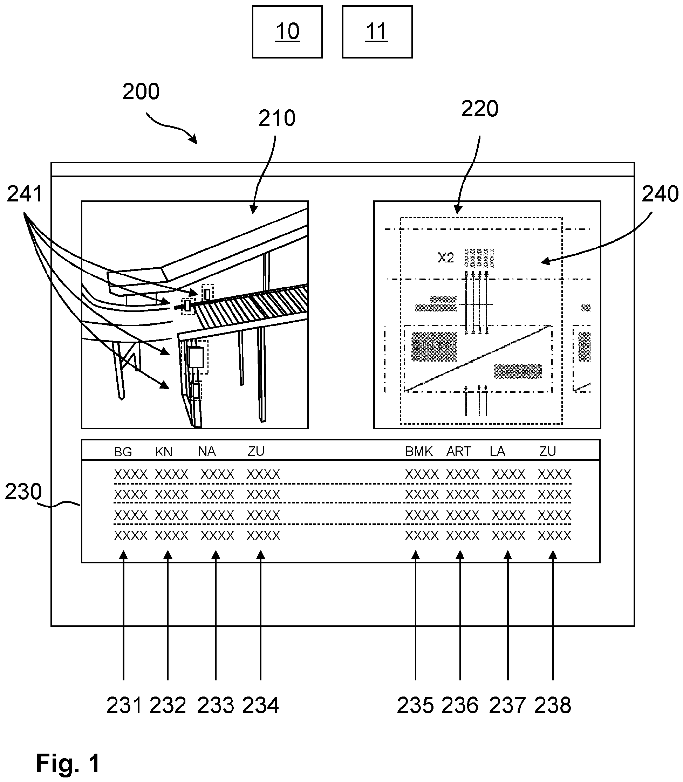

In Fig. 1 ist eine beispielhafte grafische Benutzeroberfläche 200 einer Datenverarbeitungsvorrichtung 10 und eines Computerprogramms 11 dargestellt, welche zum Abgleichen von zwei unterschiedlichen Darstellungsvarianten 210, 220 einer industriellen Anlage genutzt werden kann. Dabei können verschiedene Zusatzinformationen für die Zuordnung der bereitgestellten Komponentenspezifikation 240 zu einem der Zuordnungskandidaten 241 dienen. In einer Zuordnungstabelle 230 können die Komponentenspezifikationen 240 und/oder die Zuordnungskandidaten 241 und/oder die Zusatzinformationen aufgelistet und miteinander verknüpft werden. Beispielhaft sind dargestellt: eine Baugruppenangabe 231, ein Komponentenname 232, eine weitere Bezeichnung ("Name") 233, eine erste Zuordnungsangabe 234, eine BMK 235, eine Artikelkennzeichnung 236 wie eine Artikelnummer 236, eine Bereichsangabe 237 und eine zweite Zuordnungsangabe 238. Die Zuordnungsangaben 234 und 238 können durch die automatisierte Zuordnung festgelegt werden, um eine Komponentenspezifikation 240 in einer der Darstellungen 240 mit einem Zuordnungskandidaten 241 in der anderen der Darstellungen 241 zu verknüpfen. Sowohl die Komponentenspezifikation 240 als auch der Zuordnungskandidat 241 können dabei eine reale Komponente (und bei korrekter Zuordnung die gleiche reale Komponente) der Anlage spezifizieren.

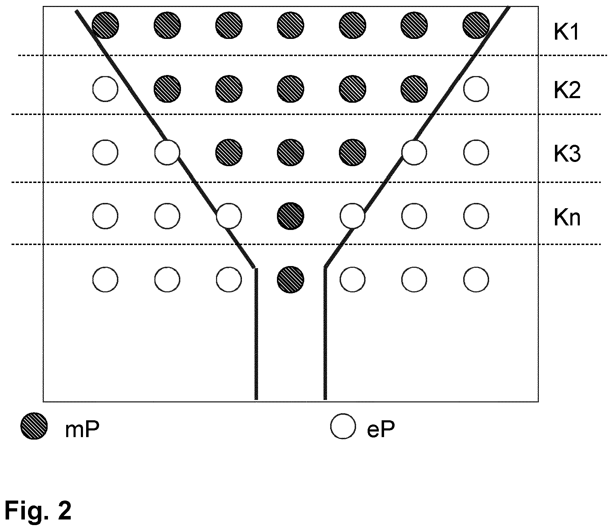

In Fig. 2 ist ein beispielhafter Ablauf für eine Zuordnung der bereitgestellten Komponentenspezifikation 240 zu einem der Zuordnungskandidaten 241 zu sehen. Hierbei werden zunächst alle möglichen Matches mP für eine spezifische BMK 235 innerhalb eines 3D-Modells als die Zuordnungskandidaten 241 bereitgestellt. Sodann kann eine schrittweise Eliminierung von Möglichkeiten durch Zuordnungskriterien Kn erfolgen. Die möglichen Positionen für ein Match sind dabei mit mP und die eliminierten Positionen für ein Match mit eP gekennzeichnet.

Zunächst kann für die Bereitstellung aller möglichen Matches mP nach einem ersten Zuordnungskriterium K1 wie der Baugruppe gefiltert werden. Anschließend kann eine weitere Eliminierung von Matches eP anhand eines zweiten Zuordnungskriteriums K2 wie der Artikelnummer erfolgen. Gemäß einem dritten Zuordnungskriterium K3 kann bspw. die örtliche Nähe einer Position zu bekannten Verbindungspartnern berücksichtigt werden. Ebenfalls sind zusätzliche Zuordnungskriterien Kn zur weiteren Eingrenzung und Eliminierung von Zuordnungskandidaten 241 denkbar, wie die Berücksichtigung der Anschlusscodierung, technischer Eigenschaften und/oder auf Machine Learning basierte Zuordnungskriterium. Der verbleibende mögliche Match mP stellt schließlich die automatisiert ermittelte Position für einen Match dar.

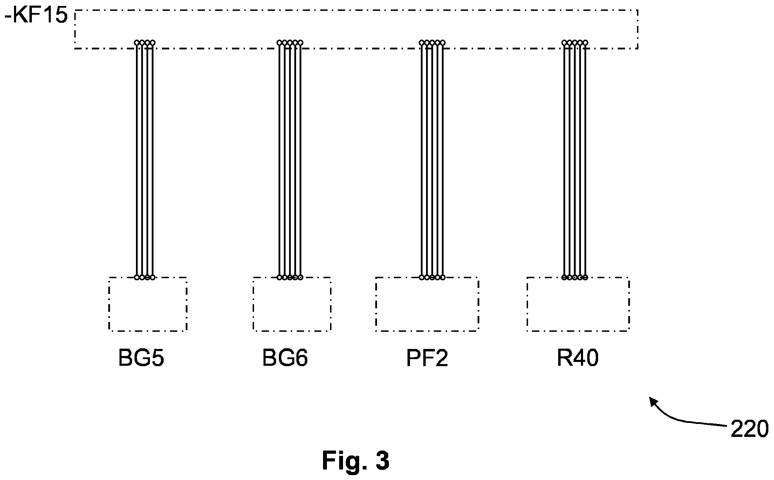

In Fig. 3 ist eine elektrische Darstellung 220 der Anlage dargestellt, wobei in einer Ausgangssituation eine Komponentenspezifikation 240 einer Komponente in der elektrischen Darstellung 220 noch ohne die Zuordnung zu einem Zuordnungskandidaten 241 einer mechanischen Darstellung 210 vorliegen kann. Entsprechend sind auch die Zuordnungsangaben 234 und 238 zu dieser Komponente noch nicht festgelegt (vgl. Fig. 1). Bspw. soll dann eine zu matchende Position innerhalb eines 3-D Modells der mechanischen Darstellung 210 für das BMK "-KF15" ermittelt werden. Dabei kann anhand der Zusatzinformationen festgestellt werden, dass die unmittelbaren Verbindungspartner von KF15 unter anderem BG5, BG6 und PF2 sind. Dabei kann die eindeutige Zuordnung der Komponentenspezifikation, d. h. des BMKs KF15, zu einer in der mechanischen Darstellung 210 repräsentierte Komponente zunächst verhindert sein. Ein nicht dargestelltes BMK "-KF14" kann bspw. ein technisch identisches Produkt bezeichnen, welches sich in derselben Baugruppe befindet und somit die Zuordnung erschwert. Es ergeben sich dann für die Zuordnung von KF15 zwei mögliche Zuordnungskandidaten 241 an den Positionen PA und PB. Eine Zuordnung der BMKs zu einer spezifischen Position in der mechanischen und insbesondere dreidimensionalen Darstellung 210 war herkömmlicherweise nicht automatisiert möglich.

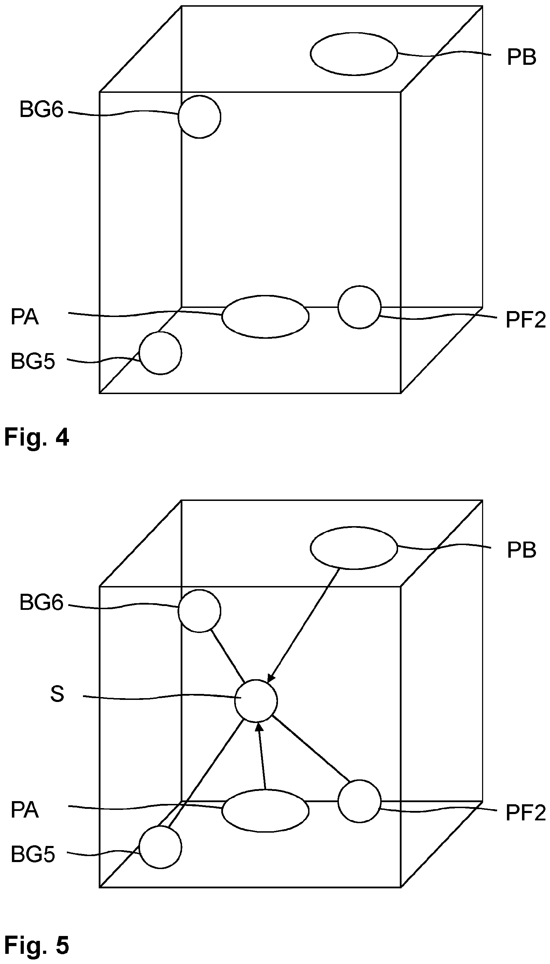

In Fig. 4 sind die identifizierten Positionen PA und PB der Zuordnungskandidaten 241 sowie - als Zusatzinformationen - die Positionen der Verbindungspartner BG5, BG6 und PF2 in einem 3D-Modell der mechanischen Darstellung 210 gezeigt. In Fig. 5 wird ein Ansatz zur automatisierten Zuordnung der Komponentenspezifikation 240 (BMK "KF15") zu einem der Zuordnungskandidaten 241 visualisiert. Nachdem zunächst die Positionen der erwarteten Verbindungspartner BG5, BG6 und PF2 innerhalb des 3D-Modells ermittelt worden sind, kann ein Schwerpunkt S der Verbindungspartner ermittelt werden. Hierbei können den Positionen einheitliche oder differenzierte Gewichtungen beigemessen werden (z.B. basierend auf Machine Learning Input). Anschließend können Vektoren zwischen dem ermittelten Schwerpunkt S der Verbindungspartner und der Positionen PA und PB aufgestellt werden. Ein Zuordnen (Matchen) der BMK "KF15" zu einem der Positionen PA und PB kann dann basierend auf der ermittelten Vektorlänge erfolgen.

Gemäß einer Variante kann, falls für die erwarteten Verbindungspartner innerhalb der Anlage, insbesondere Maschine, kein automatisiertes Match erzeugt werden kann, ein Optimierungsansatz angewandt werden. Positionen innerhalb des 3D-Modells können dann basierend auf technischen Eigenschaften und den erwarteten Gruppierungen aus der elektrischen Darstellung 220 basierend auf Verbindungspartnern der Komponenten gruppiert werden. Weiter können Matchingoptionen mit korrekter technischer Zuordnung ermittelt werden, in welcher über die gesamte Baugruppe und/oder Anlage/Maschine hinweg betrachtet die geringsten Abstände zwischen den Schwerpunkten S und den jeweiligen Verbindungspartnern entstehen.

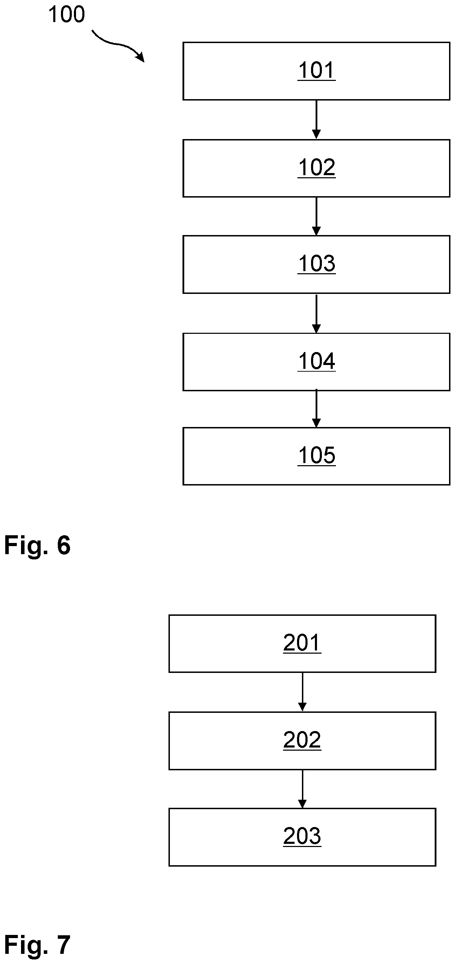

In Fig. 6 ist ein Verfahren 100 gemäß Ausführungsvarianten der Erfindung dargestellt, welches zum computer-gestützten Abgleichen von mindestens zwei unterschiedlichen Darstellungsvarianten 210,220 einer industriellen Anlage, insbesondere einer elektrischen Maschine und/oder einer industriellen Automatisierungsanlage, dient.

Dabei ist gemäß einem ersten Verfahrensschritt 101 vorgesehen: Bereitstellen einer Komponentenspezifikation 240 aus einer ersten Darstellungsvariante der Anlage, wobei die erste Darstellungsvariante sich von einer zweiten Darstellungsvariante der Anlage unterscheidet, wobei eine der Darstellungsvarianten eine elektrische Darstellung 220 der Anlage und die andere der Darstellungsvarianten eine mechanische Darstellung 210 der Anlage ist. Für den ersten Verfahrensschritt 101 kann bspw. eine Vorrichtung 10 (s. Fig. 1) die Komponentenspezifikation 240 aus einem Datenspeicher auslesen oder mittels einer Eingabevorrichtung wie einer Tastatur oder eines Touchscreens als eine Benutzereingabe erfassen oder mittels eines Prozessors aus einer Verarbeitung der ersten Darstellungsvariante, wie eines Schaltplans oder einer Fotografie, ermitteln.

Weiter ist gemäß einem zweiten Verfahrensschritt 102 vorgesehen: Bereitstellen von Zuordnungskandidaten 241 aus der zweiten Darstellungsvariante für eine Zuordnung der bereitgestellten Komponentenspezifikation 240. Für den zweiten Verfahrensschritt 102 kann ebenfalls die Vorrichtung 10 die Zuordnungskandidaten 241 aus einem Datenspeicher auslesen oder automatisiert mittels eines Prozessors aus einer Verarbeitung der zweiten Darstellungsvariante ermitteln.

Weiter ist gemäß einem dritten Verfahrensschritt 103 vorgesehen: Bereitstellen von Zusatzinformationen zu der bereitgestellten Komponentenspezifikation 240 und den bereitgestellten Zuordnungskandidaten 241 sowohl aus der ersten als auch aus der zweiten Darstellungsvariante. Hierbei können die Zusatzinformationen durch die Vorrichtung 10, wie zuvor beschrieben, mittels Benutzereingabe und/oder durch das Auslesen eines Datenspeichers und/oder einer automatisierten Verarbeitung der ersten und/oder zweiten Darstellungsvariante oder auch weiterer Darstellungsvarianten ermittelt werden.

Weiter ist gemäß einem vierten Verfahrensschritt 104 vorgesehen: Auswerten, insbesondere computer-gestützt und/oder (zumindest teilweise) automatisiert, der Zusatzinformationen gemäß wenigstens einem Zuordnungskriterium Kn. Diese Auswertung wird vorzugsweise durch einen Prozessor der Vorrichtung 10 durchgeführt, ggf. unter Zuhilfenahme einer Cloud-Technologie.

Weiter ist gemäß einem fünften Verfahrensschritt 105 vorgesehen: Zuordnen der bereitgestellten Komponentenspezifikation 240 zumindest teilweise oder vollständig automatisiert zu einem der bereitgestellten Zuordnungskandidaten 241 auf Basis des Auswertens 104. Für diese Zuordnung wird vorzugsweise wenigstens ein digitaler Verweis in einem nicht-flüchtigen Datenspeicher durch die Vorrichtung 10 abgelegt.

Die Komponentenspezifikation 240 kann dabei insbesondere mehrere Ausgangspunkte spezifizieren. Wenn bspw. eine elektrische Darstellung 220 wie ECAD der Ausgangspunkt ist, kann die Komponentenspezifikation 240 eine Kennzeichnung wie eine Betriebsmittelkennzeichnung 235 umfassen, die ein Benutzer bspw. im Schaltplan auswählt, um die hierzu passende Komponente in der mechanischen Darstellung 210 zu finden. Dies ist z. B. in der Planungsphase der Anlage nützlich, wenn z. B. der Benutzer zu einer Komponente eine Kabellänge automatisiert einplanen möchte. Hierzu kann dank der Zuordnung der Abstand von der Komponente zu einem weiteren Gerät der Anlage ermittelt werden. Auch nach Planung können sich Vorteile ergeben. So kann bspw. anhand der Zuordnung ein Installationsplan erstellt werden. Hierzu können die Zuordnung zwischen den Komponenten in der elektrischen Darstellung 220 und in der mechanischen Darstellung 210 verwendet werden.

Eine weitere Möglichkeit ist, dass eine mechanische Darstellung 210 wie MCAD der Ausgangspunkt ist. In diesem Fall kann die Komponentenspezifikation 240 auch eine Geometrie oder eine Position in der mechanischen Darstellung 210 (im MCAD) sein, zu welchem der Benutzer das passende Kennzeichen der Komponente in der elektrischen Darstellung 220 (ECAD) finden will.

Darüber hinaus kann die Komponentenspezifikation 240 auch aus einem anderen Medium resultieren, z. B. einer fotografischen Aufzeichnung, die ein Benutzer erstellt hat. Dies ist z. B. nützlich, wenn der Benutzer bei Wartungsarbeiten wissen möchte, welches Kennzeichen in der elektrischen oder mechanischen Darstellung 210 zu einem Gerät gehört, das er hierzu abfotografiert hat.

Die Zuordnungskandidaten 241 sind dann insbesondere mögliche "Matches". Da die Zuordnung oft nicht eindeutig möglich ist (die BMKs fehlen bspw. im MCAD), können die möglichen Matches anhand der Zuordnungskriterien immer weiter eingegrenzt werden, bis am Ende nur noch ein Zuordnungskandidat 241 übrigbleibt. Die Zuordnung zwischen Komponentenspezifikation 240 und dem verbliebenden Zuordnungskandidaten 241 ist dann z. B. mittels eines gegenseitigen Verweisen möglich.

In Fig. 7 sind mögliche Schritte eines Vorbereitungsablaufs dargestellt, um die für das "Matching" benötigten Daten vorzubereiten. Gemäß einem ersten Vorbereitungsschritt 201 kann ein Ausleiten einer Liste der zu matchenden Komponenten/BMKs aus dem ECAD erfolgen. Gemäß einem zweiten Vorbereitungsschritt 202 kann ein Ausleiten einer Liste der zu matchenden Komponenten/Positionen aus dem MCAD durchgeführt werden. Gemäß einem dritten Vorbereitungsschritt 203 können Komponenten/Positionen/BMKs inklusive Metadaten (z.B. Artikelnummer, Verbindungspartner, umliegenden Positionen, Eigenschaften) für das automatisierte Matchen bereitgestellt werden.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: Vorrichtung
- 11: Computerprogramm

- 100: Verfahren
- 101: erster Verfahrensschritt
- 102: zweiter Verfahrensschritt
- 103: dritter Verfahrensschritt

- 200: Grafische Benutzeroberfläche, GUI
- 201: erster Vorbereitungsschritt
- 202: zweiter Vorbereitungsschritt
- 203: dritter Vorbereitungsschritt
- 210: MCAD-Anlagendarstellung, mechanische Darstellung

- 220: ECAD-Anlagendarstellung, elektrische Darstellung
- 230: Zuordnungstabelle
- 231: Baugruppenangabe
- 232: Komponentenname
- 233: Name
- 234: erste Zuordnungsangabe
- 235: BMK, Betriebsmittelkennzeichnung
- 236: Artikelkennzeichnung, Artikelnummer
- 237: Bereichsangabe
- 238: zweite Zuordnungsangabe

- 240: Komponentenspezifikation
- 241: Zuordnungskandidaten
- 234,238: Verknüpfung

- eP: eliminierte Positionen für ein Match
- mP: mögliche Positionen für ein Match
- PF2: BMK für ein drittes Produkt
- BG5: BMK für ein erstes Produkt
- BG6: BMK für ein zweites Produkt
- Kn: n-tes Kriterium
- K1: erstes Zuordnungskriterium
- K2: zweites Zuordnungskriterium
- K3: drittes Zuordnungskriterium
- PA: erste Position
- PB: zweite Position
- R40: BMK für ein viertes Produkt
- S: Schwerpunkt

## Patentansprüche

1. Verfahren (100) zum computer-gestützten Abgleichen von mindestens zwei unterschiedlichen Darstellungsvarianten (210,220) einer industriellen Anlage, insbesondere einer elektrischen Maschine und/oder einer industriellen Automatisierungsanlage, umfassend die nachfolgenden Schritte:
- Bereitstellen (101) einer Komponentenspezifikation (240) aus einer ersten Darstellungsvariante der Anlage, wobei die erste Darstellungsvariante sich von einer zweiten Darstellungsvariante der Anlage dadurch unterscheidet, dass zumindest ein Teil der Anlage mit unterschiedlicher Funktionsweise und/oder Charakteristik dargestellt wird, wobei insbesondere eine der Darstellungsvarianten eine elektrische Darstellung (220) der Anlage und die andere der Darstellungsvarianten eine mechanische oder hydraulische oder pneumatische oder fluide Darstellung (210) der Anlage ist,
- Bereitstellen (102) von Zuordnungskandidaten (241) aus der zweiten Darstellungsvariante für eine Zuordnung der bereitgestellten Komponentenspezifikation (240),
- Bereitstellen (103) von Zusatzinformationen zu der bereitgestellten Komponentenspezifikation (240) und den bereitgestellten Zuordnungskandidaten (241) sowohl aus der ersten als auch aus der zweiten Darstellungsvariante,
- Auswerten (104) der Zusatzinformationen gemäß wenigstens einem Zuordnungskriterium (Kn),
- Zuordnen (105) der bereitgestellten Komponentenspezifikation (240) zumindest teilweise automatisiert zu einem der bereitgestellten Zuordnungskandidaten (241) auf Basis des Auswertens (104).

2. Verfahren (100) nach Anspruch 1,
**dadurch gekennzeichnet,**
**dass** auf Basis der vorgenommenen Zuordnung (105) zumindest eine Installationsangabe, insbesondere eine Installationsanweisung, vorzugsweise zumindest ein Teil eines Installationsplans, für wenigstens eine Installationshandlung und/oder -vorbereitung bei einer Wartung und/oder einem Aufbau der Anlage automatisiert erzeugt wird,
wobei durch die vorgenommene Zuordnung (105) eine Verknüpfung, insbesondere Mechanisch-elektrische-Verknüpfung, aus den unterschiedlichen Darstellungen, bevorzugt der mechanischen und elektrischen Darstellung (210,220), vorzugsweise von MCAD- und ECAD-Daten, automatisiert erzeugt wird, und auf Basis dieser Verknüpfung eine vorhandene Installationsinformation um eine zusätzliche, insbesondere elektrische und/oder räumliche, Information über die Anlage ergänzt wird, wobei aus der ergänzten Installationsinformation die zumindest eine Installationsangabe, vorzugsweise für den Installationsplan und/oder in Form einer Schritt-für-Schritt-Anweisung, automatisiert erzeugt wird, um einen Benutzer für die wenigstens eine Installationshandlung und/oder-vorbereitung computer-gestützt anzuleiten.

3. Verfahren (100) nach Anspruch 2,
**dadurch gekennzeichnet,**
**dass** die zumindest eine Installationsangabe eine Navigationsinformation für die Anlage umfasst, um den Benutzer von einem ersten Ort, insbesondere für eine erste Installationshandlung, zu einem zweiten Ort, insbesondere für eine zweite Installationshandlung, der Anlage zu navigieren, wobei die Navigationsinformation vorzugsweise einen berechneten Weg umfasst, welchen den Benutzer vom ersten zum zweiten Ort der Anlage führt, wobei der Weg bei der Berechnung hinsichtlich der Weglänge und/oder Installationsdauer des Aufbaus und/oder der Wartung und/oder der Installationshandlungen anhand der Mechanisch-elektrischen-Verknüpfung optimiert wird, und/oder
**dass** die zumindest eine Installationsangabe mehrere Schritt-für-Schritt-Anweisungen umfasst, welche die zum Aufbau und/oder zur Wartung notwendigen Installationshandlungen für den Benutzer anleiten, wobei die Schritt-für-Schritt-Anweisungen hinsichtlich einer Vereinfachung und/oder Beschleunigung und/oder Effizienz und/oder Logistik automatisiert optimiert werden, bevorzugt unter Berücksichtigung zumindest einer der folgenden Angaben:
- einer Erfahrungsangabe über den Benutzer,
- einer Ortsangabe über wenigstens eine Komponente der Anlage, welche aus der ergänzten räumlichen Information ermittelt wird,
- einer Inventarinformation,
- einer Verfügbarkeitsinformation über zu bestellende Komponenten, wobei hierzu eine Datenbankschnittstelle verwendet wird.

4. Verfahren (100) nach Anspruch 2 oder 3,
**dadurch gekennzeichnet,**
**dass** die zumindest eine Installationsangabe eine oder mehrere Kabellängen für eine Kabellängenplanung angibt, wobei für eine automatisierte Erzeugung der einen oder mehreren Kabellängen auf Basis der Mechanisch-elektrischen-Verknüpfung ein Vergleich von räumlichen Positionen von zu verbindenden Komponenten der Anlage erfolgt, um eine benötigte Kabellänge zur Verbindung der Komponenten zu ermitteln, insbesondere zu schätzen, und/oder
**dass** die zumindest eine Installationsangabe eine Angabe von wenigstens einer Schnittstelle, insbesondere einer vorgesehenen Kabelverbindung, zwischen zu verbindenden Komponenten der Anlage umfasst, wobei die Angabe der wenigstens einen Schnittstelle dadurch automatisiert erzeugt wird, dass auf Basis der Mechanisch-elektrischen-Verknüpfung solche Schnittstellen der Anlage gesucht und/oder gefiltert und/oder ausgewählt werden, bei denen die zu verbindenden Komponenten in verschiedenen mechanischen Baugruppen der Anlage gemäß der mechanischen Darstellung (210), aber in gleichen elektrischen Baugruppen der Anlage gemäß der elektrischen Darstellung (220) vorgesehen sind, und/oder
**dass** die zumindest eine Installationsangabe eine oder mehrere Kabeltypen für eine Kabelplanung angibt, wobei für die automatisierte Erzeugung der einen oder mehreren Kabeltypen auf Basis der Verknüpfung, insbesondere Mechanisch-elektrischen-Verknüpfung, ein Vergleich von räumlichen Positionen von zu verbindenden Komponenten der Anlage erfolgt, um einen benötigten Kabeltyp zur Verbindung der Komponenten zu ermitteln.

5. Verfahren (100) nach einem der vorhergehenden Ansprüche,
**dadurch gekennzeichnet,**
**dass** eine automatisierte Bilderkennung wenigstens eines Objekts, insbesondere einer Komponente der Anlage, durchgeführt wird, um als Ergebnis der Bilderkennung die wenigstens eine Komponente, insbesondere wenigstens ein Gerät, der Anlage vorzugsweise auf einer Fotografie oder einem Video, zu erkennen, wobei das Ergebnis der Bilderkennung zur Bereitstellung der Komponentenspezifikation (240) verwendet wird, um die jeweilige erkannte Komponente einem der bereitgestellten Zuordnungskandidaten (241) automatisiert zuzuordnen, und/oder
**dass** der Schritt des Bereitstellens (103) der Zusatzinformationen zu der bereitgestellten Komponentenspezifikation (240) und den bereitgestellten Zuordnungskandidaten (241) eine automatisierte Bilderkennung umfasst, um als Ergebnis der Bilderkennung wenigstens eine Komponente, insbesondere ein Gerät, und/oder eine Position der Komponente in der Anlage auf einer Aufzeichnung wie einer Fotografie oder einem Video zu erkennen, wobei das Ergebnis der Bilderkennung als eine der Zusatzinformationen verwendet wird.

6. Verfahren (100) nach Anspruch 5,
**dadurch gekennzeichnet,**
**dass** die jeweilige Bilderkennung den nachfolgenden Schritt umfasst: Erkennen der Komponente, insbesondere aus der ersten oder zweiten Darstellungsvariante in der Form einer Fotografie und/oder eines Videos und/oder einer 3D-Darstellung und/oder einer Schemata-Darstellung, insbesondere PDF oder Skizze, der Anlage, anhand
- Einer, vorzugsweise im Bild und/oder in Metadaten einer Datei, dargestellten Artikelnummer und/oder Kennzeichnung, und/oder
- einer im Bild dargestellten Kodierung der elektrischen Komponente, insbesondere eines Steckverbinders, und/oder
- der visuellen geometrischen Abbildung der Komponente, insbesondere durch einen Abgleich der Abbildung mit vorgegebenen und/oder vorhandenen Abbildungen von Komponenten der Anlage.

7. Verfahren (100) nach einem der vorhergehenden Ansprüche,
**dadurch gekennzeichnet,**
**dass** die bereitgestellte Komponentenspezifikation (240) und die bereitgestellten Zuordnungskandidaten (241) jeweils zumindest eine reale bereits vorhandene oder geplante Komponente der Anlage spezifizieren, wobei die Zusatzinformationen lediglich einen Hinweis zur Identifizierung der durch die Zuordnungskandidaten (241) spezifizierten realen Komponenten bereitstellen, und wobei vorzugsweise die Komponentenspezifikation (240) die reale Komponente hingegen über eine Kennzeichnung wie eine Betriebsmittelkennzeichnung (235) eindeutig oder eineindeutig spezifiziert, wobei bei dem Auswerten (104) die Zusatzinformationen gemäß dem wenigstens einen Zuordnungskriterium (Kn) automatisiert verglichen werden, um zumindest schätzungsweise den zur Komponentenspezifikation (240) zugehörigen Zuordnungskandidaten (241) zu ermitteln, welcher die gleiche reale Komponente wie die Komponentenspezifikation (240) spezifiziert, um bei dem Zuordnen (105) die Komponentenspezifikation (240) zu diesem ermittelten Zuordnungskandidaten (241) zuzuordnen.

8. Verfahren (100) nach Anspruch 7,
**dadurch gekennzeichnet,**
**dass** die Komponentenspezifikation (240) eine Kennzeichnung wie eine Betriebsmittelkennzeichnung (235) umfasst, durch welche die reale Komponente eindeutig oder eineindeutig in einer der Darstellungen, vorzugsweise der elektrischen Darstellung (220), identifiziert wird, und/oder
**dass** die Komponentenspezifikation (240) zumindest eine der folgenden Angaben als die Kennzeichnung umfasst: eine Artikelnummer, eine Seriennummer, eine MAC-Adresse, einen Komponentennamen, eine IO-Link Beschreibung, einen IO-Link Namen, einen gerätespezifischen Tag, einen Herstellernamen.

9. Verfahren (100) nach Anspruch 7 oder 8,
**dadurch gekennzeichnet,**
**dass** der jeweilige Zuordnungskandidat (241) eine reale Komponente der Anlage nur ungenau spezifiziert, und hierzu der Zuordnungskandidat (241) oder eine der Zusatzinformationen eine Position für die Komponente in einem dreidimensionalen Modell in der mechanischen Darstellung (210) angibt, wobei die Auswertung (104) zumindest teilweise auf einer Analyse basiert, welche Komponenten der Anlage als Verbindungspartner benachbart an dieser Position in der mechanischen Darstellung (210) dargestellt sind, in welcher Weise die Verbindungspartner in der elektrischen Darstellung (210) dargestellt sind, und wie diese in Relation mit der Komponentenspezifikation (240) stehen, vorzugsweise ob sie auf der gleichen Schaltplanseite dargestellt sind, und/oder
**dass** das Auswerten (104) ein automatisiertes und schrittweises Vergleichen der Zusatzinformationen anhand von mindestens zwei oder mindestens drei oder mindestens vier Zuordnungskriterien (Kn) umfasst, um schrittweise die Zuordnungskandidaten (241) zu eliminieren.

10. Verfahren (100) nach einem der Ansprüche 7 bis 9,
**dadurch gekennzeichnet,**
**dass** die jeweilige Zusatzinformation zumindest eine der folgenden Angaben umfasst:
- eine Angabe von Verbindungspartnern der realen Komponente, die durch die Komponentenspezifikation (240) oder durch den jeweiligen Zuordnungskandidaten (241) spezifiziert wird,
- eine Position der realen Komponente in der Anlage, oder
- technische Eigenschaften der realen Komponente,
wobei bei dem Auswerten (104) ein räumlicher Schwerpunkt der Verbindungspartner ermittelt wird, und der räumliche Schwerpunkt mit den Positionen der Zuordnungskandidaten (241) verglichen wird, um auf Basis dieses Vergleichs einen Teil der Zuordnungskandidaten (241) zu eliminieren.

11. Verfahren (100) nach einem der Ansprüche 7 bis 10,
**dadurch gekennzeichnet,**
**dass** das Zuordnen (105) der bereitgestellten Komponentenspezifikation (240) zu dem einen der Zuordnungskandidaten (241) auf Basis des Auswertens (104) erfolgt, um die geplante Komponente, insbesondere einen Verteiler, an welchem ein oder mehrere der durch die Komponentenspezifikation (240) spezifizierten realen Komponenten und/oder Verbindungspartner angeschlossen werden sollen, entsprechend der Spezifikation des Zuordnungskandidaten (241), insbesondere einer räumlichen Position, in der Anlage zu installieren.

12. Verfahren (100) nach einem der vorhergehenden Ansprüche,
**dadurch gekennzeichnet,**
**dass** bei dem Auswerten (104) zunächst gemäß einem ersten Zuordnungskriterium (K1) eine erste Zusatzinformation, insbesondere eine Baugruppenkennzeichnung, der bereitgestellten Komponentenspezifikation (240) und der bereitgestellten Zuordnungskandidaten (241) verglichen wird, um einen Teil der Zuordnungskandidaten (241) auf Basis des ersten Zuordnungskriteriums (K1) zu eliminieren, und anschließend gemäß einem zweiten Zuordnungskriterium (K2) eine zweite Zusatzinformation, insbesondere eine Artikelnummer, der bereitgestellten Komponentenspezifikation (240) und der verbleibenden Zuordnungskandidaten (241) verglichen wird, um einen weiteren Teil der Zuordnungskandidaten (241) auf Basis des zweiten Zuordnungskriteriums (K2) zu eliminieren, und anschließend gemäß einem dritten Zuordnungskriterium (K3) eine dritte Zusatzinformation, insbesondere eine Position, der bereitgestellten Komponentenspezifikation (240) und der verbleibenden Zuordnungskandidaten (241) verglichen wird, um einen weiteren Teil der Zuordnungskandidaten (241) auf Basis des dritten Zuordnungskriteriums (K3) zu eliminieren, und anschließend gemäß einem n-ten Zuordnungskriterium (Kn) eine n-te Zusatzinformation der bereitgestellten Komponentenspezifikation (240) und der verbleibenden Zuordnungskandidaten (241) verglichen wird, um einen weiteren Teil der Zuordnungskandidaten (241) auf Basis des n-ten Zuordnungskriteriums (Kn) zu eliminieren.

13. Verfahren (100) nach einem der vorhergehenden Ansprüche,
**dadurch gekennzeichnet,**
**dass** mehr als die zwei unterschiedlichen Darstellungsvarianten (210,220) der Anlage, insbesondere mindestens drei oder mindestens vier oder mindestens fünf unterschiedliche Darstellungsvarianten (210,220), abgeglichen werden, wobei sich die erste, die zweite und auch eine dritte und/oder vierte und/oder fünfte Darstellungsvariante und/oder weitere Darstellungsvarianten der Anlage voneinander unterscheiden, wobei die Zuordnungskandidaten (241) und/oder die Zuordnungsinformationen aus den weiteren Darstellungsvarianten bereitgestellt werden.

14. Computerprogramm (11), umfassend Befehle, die bei der Ausführung des Computerprogramms (11) durch einen Computer (10) diesen veranlassen, das Verfahren (100) nach einem der vorhergehenden Ansprüche auszuführen.

15. Vorrichtung (10) zur Datenverarbeitung, die eingerichtet ist, das Verfahren (100) nach einem der Ansprüche 1 bis 13 auszuführen.
